# EUROPEAN PATENT APPLICATION

(11) **EP 3 091 644 A1**
(43) Date of publication of application: **09.11.2016**
(21) Application number: 16168611.8
(22) Date of filing: 06.05.2016
(51) Int. Cl.: H02K 29/03, H02K 1/27, D06F 37/30

(54) **WASHING MACHINE AND DRIVING APPARATUS THEREOF**

(30) Priority: 08.05.2015 CN 201510233218; 28.09.2015 CN 201510629616; 20.10.2015 CN 201510684071
(71) Applicant: Johnson Electric S.A., 3280 Murten (CH)
(72) Inventor: Li, Yue, Hong Kong (HK); Zhou, Chui You, Hong Kong (HK); Wang, Yong, Hong Kong (HK); Li, Gang, Hong Kong (HK); Li, Yong, Hong Kong (HK); Zhang, Wei, Hong Kong (HK); Chai, Jie, Hong Kong (HK); Ta, Jing Ning, Hong Kong (HK); Yu, Bin, Hong Kong (HK)
(74) Representative: Hocking, Adrian Niall

(57) **Abstract**

A driving apparatus (100) for a washing machine includes a single-phase outer rotor brushless motor (90) and a driving wheel (97). The motor drives the driving wheel (97) and includes a stator (10) and a rotor (20). The stator (10) includes a stator core (11) and windings (15) wound around the stator core (11). The rotor (20) includes a rotor yoke (22), and a permanent magnet (24). An inner surface (241) of the permanent magnet (24) and an outer surface (117) of a tooth tip (114) are opposed to each other and define an uneven gap (119) therebetween for allowing the rotor (20) to rotate relative to the stator (10). A radial width (G1) of the gap (119) associated with each magnetic pole progressively increases from a center portion toward circumferential ends of the magnetic pole, and a radial width (G2) of the gap (119) associated with each magnetic pole is symmetrical with respect to a center axis of the magnetic pole along the circumferential direction.

## Description

### FIELD OF THE INVENTION

This invention relates to driving apparatuses for a washing machine, and in particular to a driving apparatus for driving a drum of a washing machine.

### BACKGROUND OF THE INVENTION

A driving apparatus for driving drums of washing machines usually includes a motor. Traditionally, permanent magnet synchronous motors are widely used in the washing machines. The permanent magnet synchronous motor usually includes a rotor and a stator surrounding the rotor. The stator comprises a stator core with a plurality of teeth, and a winding consisted of a plurality of coils. Each coil is wound around multiple teeth and adjacent coils have overlapped ends. Therefore later wound coils have high coil ends which waste material. This type of permanent magnet synchronous motor tends to be bulky and heavy.

### SUMMARY OF THE INVENTION

Thus, there is a desire for a driving apparatus for a washing machine with reduced size and weight.

In one aspect, a driving apparatus for a washing machine is provide, which includes a single-phase outer rotor brushless motor and a transmission mechanism driven by the motor. The single-phase outer rotor brushless motor is configured to drive a drum of the washing machine to rotate through the transmission mechanism. The single-phase outer rotor brushless motor includes a stator and a rotor. The stator includes a stator core and windings wound around the stator core. The stator core includes a yoke and a plurality of teeth extending radially outwardly from the yoke. Each of the teeth includes a tooth body and a tooth tip extending from a distal end of the tooth body in a circumferential direction. The rotor includes a rotor yoke disposed around the stator core, and a permanent magnet disposed on an inner wall surface of the rotor yoke for forming a plurality of magnetic poles. Inner surfaces of the magnetic poles face outer surfaces of the tooth tips with a gap formed there between for allowing the rotor to rotate relative to the stator.

Preferably, the gap is a symmetric gap such that the rotor is capable of being started bi-directionally.

Preferably, the gap is a symmetric uneven gap and the rotor is capable of being position at an initial position by leakage magnetic field generated by the permanent magnet of the rotor interacting with the tooth tips of the stator.

Preferably, a radial width of the gap corresponding with each magnetic pole is symmetrical with respect to a circumferential middle line of the magnetic pole. Preferably, the middle line extends along a radial direction of the rotor.

Preferably, a radial width of the gap associated with each magnetic pole progressively increases from a center portion toward circumferential ends of the magnetic pole, and a radial width of the gap associated with each magnetic pole is symmetrical with respect to a center axis of the magnetic pole along the circumferential direction.

Preferably, the transmission mechanism includes a two-stage belt transmission, which includes a first transmission belt, a transmission wheel, and a second transmission belt. Opposite ends of the first transmission belt are respectively connected to a rotary shaft of the single-phase outer rotor brushless motor and the transmission wheel such that the single-phase outer rotor brushless motor drives the transmission wheel to rotate, and opposite ends of the second transmission belt are respectively attached around the transmission wheel and the driving wheel such that the transmission wheel drives the driving wheel to rotate.

Preferably, a transmission ratio of the rotary shaft of the single-phase outer rotor brushless motor to the transmission wheel is 2:1, and/or a transmission ratio of the transmission wheel to the driving wheel is 10:1.

Preferably, an outer diameter of the single-phase outer rotor brushless motor is 90mm, and an axial size of the single-phase outer rotor brushless motor between opposite two end surfaces thereof is 65mm.

Preferably, a slot opening is formed between each two adjacent tooth tips, and a width of the slot opening in the circumferential direction is less than or equal to five times of a minimum radial width of the gap.

Preferably, a slot opening is formed between each two adjacent tooth tips, a width of the slot opening in the circumferential direction is less than or equal to three times of a minimum radial width of the gap.

Preferably, a ratio of a maximum radial width to a minimum radial width of the gap is greater than 1.5.

Preferably, the outer surfaces of the tooth tips are located on the same cylindrical surface, and a center axis of the cylindrical surface is coincident with a center axis of the rotor.

Preferably, the inner surface of the permanent magnetic pole is a flat surface or arc surface, with a pole-arc coefficient greater than 0.75.

In another aspect, a washing machine is provided, which includes a drum, a single-phase outer rotor brushless motor and a transmission mechanism driven by the motor. The single-phase outer rotor brushless motor is configured to drive the drum to rotate through the transmission mechanism. The single-phase outer rotor brushless motor includes a stator and a rotor. The stator includes a stator core and windings wound around the stator core. The stator core includes a yoke and a plurality of teeth extending radially outwardly from the yoke. Each of the teeth includes a tooth body and a tooth tip extending from a distal end of the tooth body in a circumferential direction. The rotor includes a rotor yoke disposed around the stator core, and a permanent magnet disposed on an inner wall surface of the rotor yoke for forming a plurality of magnetic poles. Inner surfaces of the magnetic poles facing outer surfaces of the tooth tips with a gap formed there between for allowing the rotor to rotate relative to the stator, and the transmission mechanism includes a two-stage belt transmission.

Preferably, the gap is a symmetric gap such that the rotor is capable of being started bi-directionally.

Preferably, the gap is a symmetric uneven gap and the rotor is capable of being position at an initial position where a middle line of the tooth tip of the stator core is closer to a middle line of an area between two adjacent magnetic poles than middle lines of the two adjacent magnetic poles.

In various embodiments of the present invention, the driving apparatus for the washing machine adopts a single-phase outer rotor brushless motor, the stator core of the motor has small slot openings or magnetic bridges, and the gap is optimally configured such as a symmetrical gap. Therefore, the size and weight of the motor is reduced.

### BRIEF DESCRIPTION OF THE DRAWINGS

Fig. 1 is a perspective view of a driving apparatus according to one embodiment.
Fig. 2 illustrates a single-phase outer-rotor brushless motor of the driving apparatus of Fig. 1.
Fig. 3 is a sectional view of the single-phase outer-rotor brushless motor of Fig. 2, taken along a radial direction.
Fig. 4 is a sectional view of the single-phase outer-rotor brushless motor of Fig. 3, taken along an axial direction.
Fig. 5 is an enlarged view of the dotted box portion of Fig. 3.
Fig. 6 illustrates a stator core of the single-phase outer-rotor brushless motor of Fig. 2.
Fig. 7 illustrates a insulating bracket of the single-phase outer-rotor brushless motor of Fig. 2.
Fig. 8 is an assembled view of the stator core of Fig. 6 and the insulating bracket of Fig. 7.
Fig. 9 illustrates the rotor at the dead-point position when the single-phase outer-rotor brushless motor of Fig. 2 is not energized.
Fig. 10 illustrates the rotor at the initial position when the single-phase outer-rotor brushless motor of Fig. 2 is not energized.
Fig. 11 illustrates a stator core of a motor according to a second embodiment of the present invention.
Fig. 12 illustrates a stator core of a motor according to a third embodiment of the present invention.
Fig. 13 and Fig. 14 illustrate a rotor of a motor according to another embodiment of the present invention.
Fig. 15 illustrate a stator of a motor according to another embodiment of the present invention.
Fig. 16 illustrate a rotor of a motor according to another embodiment of the present invention
Fig. 17 illustrates a motor in accordance with another embodiment of the present invention.

### DETAILED DESCRIPTION OF THE PREFERRED EMBODIMENTS

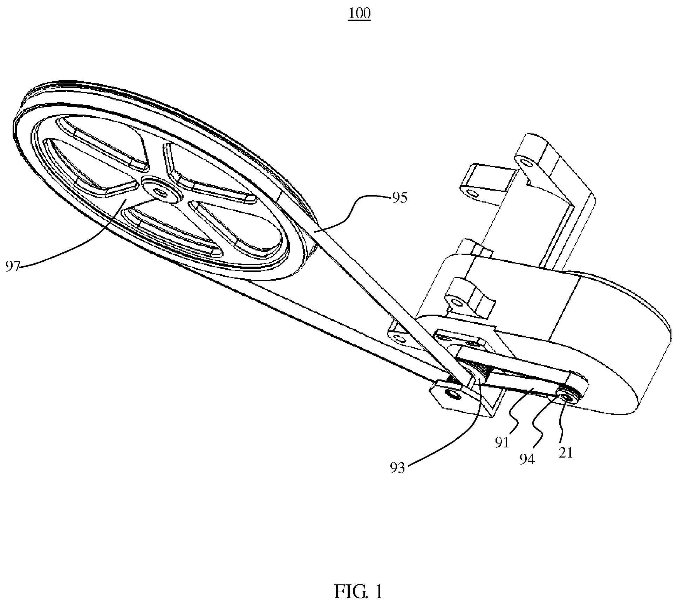

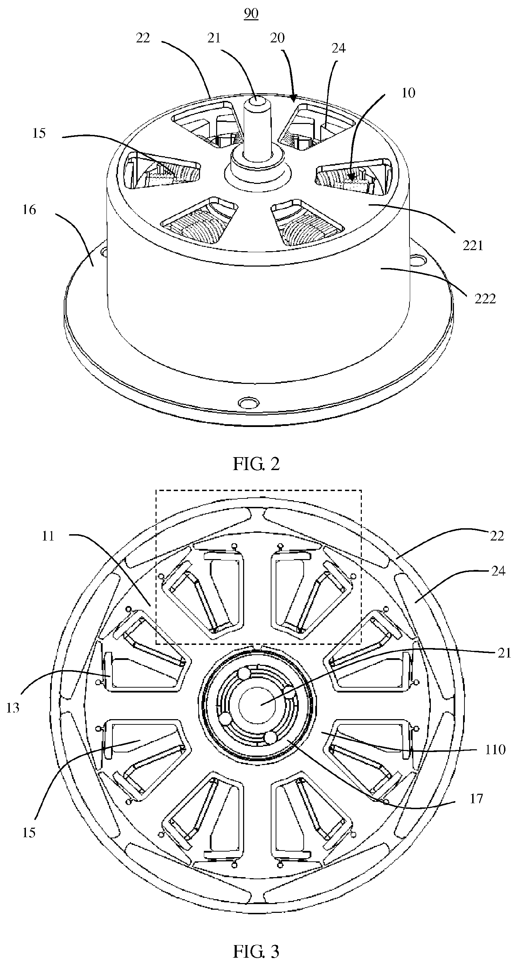

Referring to Fig. 1, a washing machine (not shown) in accordance with one embodiment of the present invention includes a driving apparatus 100 for driving a drum of the washing machine to rotate. The driving apparatus 100 includes a single-phase motor 90 (Figure. 2) and a transmission mechanism. Preferably, the transmission mechanism is a two-stage belt transmission mechanism, which includes a first transmission belt 91, a transmission wheel 93, a second transmission belt 95, and a driving wheel 97. Opposite ends of the first transmission belt 91 are attached around a rotary shaft of the single-phase motor 90 and the transmission wheel 93, respectively, such that the single-phase motor 90 drives the transmission wheel 93 to rotate. The transmission between the motor 90 and the transmission wheel 93 preferably has a transmission speed ratio of 2:1. In particular, a pulley 94 is mounted to a rotary shaft 21 of the motor to rotate along with the rotary shaft 21, and the transmission belt 91 is attached around the pulley 94 and one end of the transmission wheel 93. Opposite ends of the second transmission belt 95 are respectively attached around another end of the transmission wheel 93 and the driving wheel 97, such that the transmission wheel 93 can drive the driving wheel 97 to rotate. The transmission between the transmission wheel 93 and the driving wheel 97 preferably has a transmission speed ratio of 10:1. The driving wheel 97 is configured to drive a drum of the washing machine to rotate. The driving apparatus 100 adopts a two-stage transmission including the first transmission belt 91 and the second transmission belt 95, which achieves a high transmission ratio and improved stability by using the belt transmission. It should be understood that the driving apparatus can be configured to achieve another transmission ratio according to needs in other embodiments.

The present invention preferably adopts a single-phase outer rotor brushless motor 90, which reduces the size and weight of the motor. Fig. 2 through Fig. 4 illustrate one embodiment of the single-phase outer rotor motor. The single-phase outer rotor brushless motor includes a stator 10 and a rotor 20 surrounding the stator 10. In the illustrated embodiment, the single-phase outer rotor brushless motor has an outer diameter of 90mm. It should be understood that the single-phase outer rotor brushless motor may have another suitable size according to needs.

The stator 10 includes a stator core 11 made from a magnetic-conductive material such as iron, an insulating bracket 13 attached around the stator core 11, and windings 15 wound around the insulating bracket 13.

Referring also to Fig. 3 through Fig. 6, the stator core 11 includes an annular portion 110, i.e. a stator yoke, disposed at a center of the stator core 11, and a plurality of teeth extending radially and outwardly from the annular portion 110. A winding slot is formed between each two adjacent teeth. Each tooth includes a tooth body 112 and a tooth tip 114 extending from a distal end of the tooth body 112 along a circumferential direction. Preferably, the winding 15 comprises a plurality of coils each wound only on the tooth body 112 of a single tooth and thus no coils are overlapped. Each two adjacent tooth tips 114 define there between a slot opening 115 communicating with a corresponding winding slot. In one embodiment, each slot opening 115 has the same width in the circumferential direction. That is, the tooth tips 114 are evenly arranged along the circumferential direction. In one embodiment, each tooth is symmetrical with respect to a radius of the motor that passes through a center of the tooth body of this tooth. Preferably, the tooth tips have the same circumferential width. It should be understood that the size of each slot opening 115 may be different and the circumferential size of each tooth tip may also be different according to needs.

The annular portion 110 is generally a hollow cylinder in shape. A through hole 111 is defined through a central portion of the annular portion 110 along an axial direction. As shown in Fig. 2 through Fig. 4, the stator 10 further includes a base 16 and a bearing holder 17 formed on the base 16. The base 16 is generally circular disc-shaped. The bearing holder 17 extends perpendicularly from a central portion of the base 16, for fixedly mounting the stator core 11 thereon. Specifically, the bearing holder 17 is inserted through the through hole 111 of the annular portion 110 of the stator core 11. The bearing holder 17 defines therein a shaft hole for rotatably mounting a rotary shaft 21 of the rotor 20 therein.

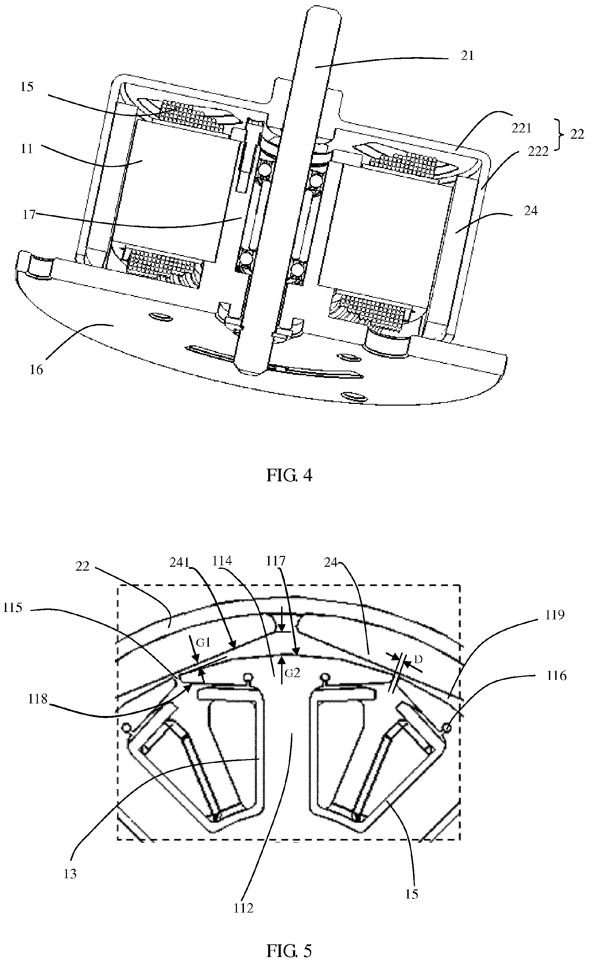

The tooth body 112 extends radially from an outer wall surface of the annular portion 110, and the tooth bodies 112 are evenly arranged along the circumferential direction of the annular portion 110. Each tooth body 112 has the tooth tip 114 formed at the radial distal end thereof. In one embodiment, the tooth tip 114 is symmetrical with respect to a radius of the motor that passes through a center of the tooth body 112. Referring also to Fig. 5, an outer surface 117 of the tooth tip 114, i.e. a surface facing the rotor 20, is an arc surface. In one embodiment, the outer surfaces 117 of the tooth tips 114 are located on the same cylindrical surface that has a central axis coincident with a central axis of the rotary shaft 21. An inner surface 118 of the tooth tip 114, i.e. a surface facing toward the annular portion 110, is a generally flat surface.

In some embodiments, slits 116 are formed in connecting corner areas between the tooth tip 114 and the tooth body 112. The provision of the slits 116 facilitates bending of the tooth tip 114 relative to the tooth body 112 and prevents creases during the process of bending the tooth tip 114 of the stator core 11. Specifically, two wing parts of the tooth tip 114 on opposite sides of the tooth body 112 extend radially outwardly in an initial state, such that the width of the slot opening 115 of the winding slot may be enlarged to facilitate winding of the windings 15. After the winding is completed, the two wing parts of the tooth tip 114 are bent inwardly about the slits 116 to a final position by using a tool. It should be understood that, in some embodiments, the slit 116 may be formed only in a connecting corner area between the tooth body 112 and the wing part of the tooth tip 112 at a single side of the tooth body 112.

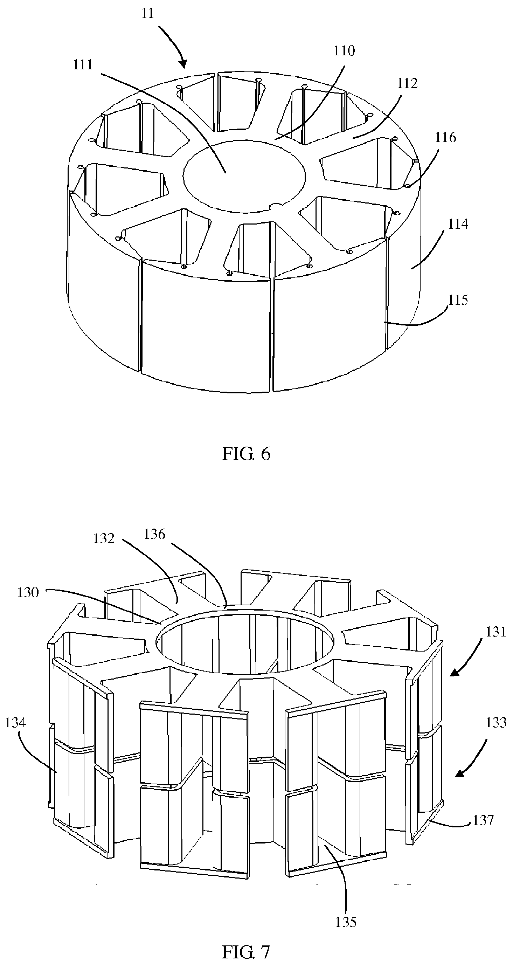

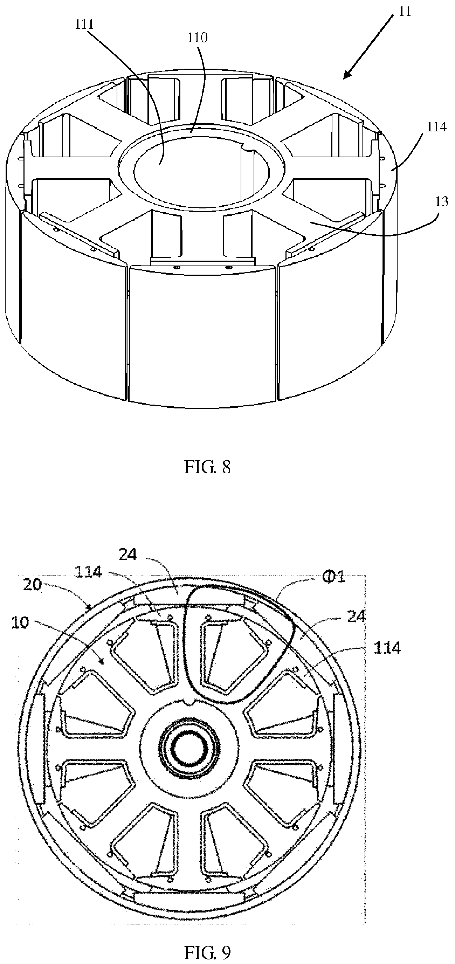

Referring to Fig. 7 and Fig. 8, the insulating bracket 13 includes an upper bracket portion 131 and a lower bracket portion 133. The upper bracket portion 131 and the lower bracket portion 133 cover the stator core 11 from opposite axial ends thereof, respectively.

The upper bracket portion 131 and the lower bracket portion 133 are substantially the same in shape and construction, and are disposed opposing to each other. Each of the upper bracket portion 131 and the lower bracket portion 133 includes a ring portion 130 attached around the annular portion 110 of the stator core 11, sleeve portions 132 attached around the tooth bodies 112, and resisting portions 134 resisting against the inner surfaces of the tooth tips 114. The ring portion 130 is generally circular tubular-shaped, which surrounds the outer wall portion of the annular portion 110 of the stator core. An annular end flange 136 extends inwardly from a top axial end of the ring portion 130. The end flange 136 covers a top end face of the annular portion 110. A side wall of the ring portion 130 forms a plurality of openings (not labeled) at which the sleeve portions 132 are disposed. The opening allows the tooth body 112 to pass therethrough. The sleeve portion 132 also has end surfaces and side surfaces corresponding to the end surface and side surfaces of the tooth body 112. The sleeve portion 132 covers end surfaces and two side surfaces of the tooth body 112. As described herein, the end surfaces of the tooth body 112 refer to a top surface and a bottom surface of the tooth body 112 in the axial direction of the motor, and the side surfaces of the tooth body 112 refer to the two surfaces that are parallel to the radial direction. It should be understood that the sleeve portion 132 of the upper bracket portion 131 covers the top surface and two side surfaces of the tooth body 112, and the sleeve portion 132 of the lower bracket portion 133 covers the bottom surface and two side surfaces of the tooth body 112. The upper bracket portion 131 and the lower bracket portion 133 covers substantially the whole side surfaces and end surfaces of the tooth body 112 so as to insulate the stator core 11 from the windings 15.

The resisting portion 134 is formed by bending a radial distal end of the sleeve portion 132 along the circumferential direction, which resists against the inner surface 118 of one corresponding tooth tip 114.

Further, a bent plate 135, 137 is disposed at an axial end of the resisting portion 134. The bent plate 135, 137 at least partially covers an end surface of the axial end portion of the tooth tip 114. In particular, the bent plate 135 is disposed at a top axial end of the resisting portion 134 of the upper bracket portion 131, which at least partially covers a top axial end surface of one corresponding tooth tip 114; the bent plate 137 is disposed at a bottom axial end of the resisting portion 134 of the lower bracket portion 133, which at least partially covers a bottom axial end surface of one corresponding tooth tip 114.

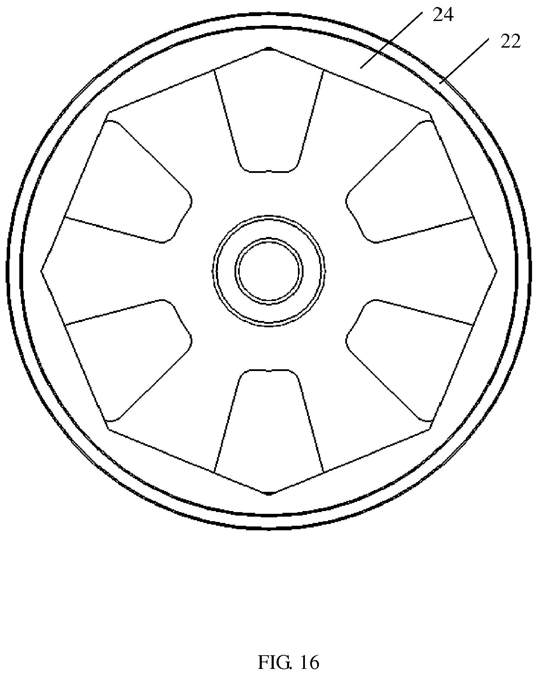

Referring to Fig. 2 through Fig. 4 the rotor 20 includes a rotary shaft 21 passing through the annular portion 110, a rotor yoke 22 fixedly connected with the rotary shaft 21, and a permanent magnet 24 disposed on an inner wall surface of the rotor yoke 22 for forming a plurality of permanent magnetic poles 24. In this embodiment, the permanent magnet 24 includes multiple split magnets, each forming a permanent magnetic pole 24. In an alternative embodiment, the permanent magnet may be formed into an integral ring magnet as shown in Fig. 16. The ring magnet 24 comprises a plurality of sections each section forming a permanent magnetic pole 24. In one embodiment, an inner surface 241 of the permanent magnet 24 is a flat surface, such that fabrication of the permanent magnet 24 can be simplified. It should be understood, however, that the inner surface of the permanent magnet 24 may also be an arc surface. In one embodiment, the pole-arc coefficient of the permanent magnet 24, i.e. a ratio of the actual spanning angle of the permanent magnet 24 along the circumferential direction to the quotient of 360 degrees divided by the number of the rotor poles, is greater than 0.75, which can improve the cogging torque characteristics and enhance the motor efficiency.

Referring to Fig. 4, the rotary shaft 21 is rotatably disposed in the shaft hole of the bearing holder 17. For example, the rotary shaft 21 is rotatably supported in the bearing holder 17 by a bearing. The rotor yoke 22 is generally barrel-shaped which covers the stator core 11. The rotor yoke 22 includes an end plate 221 fixedly connected with the rotary shaft 21, and an annular sidewall 222 extending from the end plate 221. The end plate 221 is disposed opposing to the base 16, with a gap formed between an axial end of the sidewall 222 and the base 16. The end plate 221 and the base 16 each has an end surface away from the stator core and magnets of the motor. In this embodiment, the axial size of the motor between the two end surfaces of thereof is 65mm. The end plate 221 forms therein a plurality of windows for allowing outside air to enter and cool an interior of the motor. During operation of the motor, the rotor yoke 22 and the permanent magnet 24 rotate relative to the stator under interaction between the magnetic fields of the permanent magnet 24 and the stator.

In some embodiments, the number of the permanent magnetic poles 24 may be the same or has a multiple relation with the number of the teeth. For example, the number of the teeth is two or three times of the number of the permanent magnetic poles. In this embodiment, the rotor 20 includes eight permanent magnets respectively forming eight permanent magnetic poles, the stator 10 includes eight stator teeth, and a total of eight winding slots are formed between adjacent teeth, thus forming an 8-pole 8-slot motor. In one embodiment, the stator windings are electrically connected and supplied with single-phase direct current electricity by a single-phase brushless direct current motor driver, thus forming a single-phase direct current brushless motor. It should be understood that the motor of present invention may be used as a single-phase permanent magnet synchronous motor where the stator windings are connected to a single phase alternating current power source.

As shown in Fig. 5, the inner surfaces 241 of the permanent magnetic poles 24 face the outer surface 117 of the tooth tip 114, with a gap 119 formed there between. A radial width of the gap 119 varies along a circumferential direction of the permanent magnetic pole 24, thus forming an uneven gap. The radial width of the gap 119 progressively increases from a circumferential middle toward opposite circumferential ends of an inner surface 241 of the permanent magnetic pole 24. Preferably, the gap corresponding with each magnetic pole 24 is symmetric about the circumferential middle line of the magnetic pole 24 to therefore form a symmetric uneven gap such that the rotor is capable of being started bi-directionally. A radial distance between a circumferential center point of the inner surface of the permanent magnetic pole 24 and a cylindrical surface in which the outer surface of the tooth tip 114 is located is the minimum radial width G1 of the gap 119, and a radial distance between a circumferential end point of the inner surface of the permanent magnetic pole 24 and the cylindrical surface in which the outer surface of the tooth tip 114 is located is the maximum radial width G2 of the gap 119. Preferably, a ratio of the maximum radial width to the minimum radial width of the gap 119 is greater than 1.5, i.e. G2:G1>1.5. More preferably, the ratio of the maximum radial width to the minimum radial width of the gap is greater than 2, i.e. G2:G1>2.

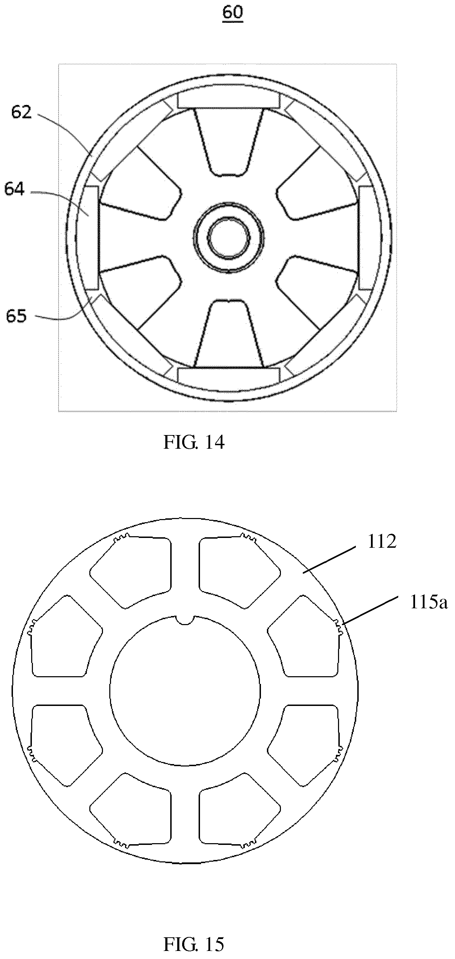

A width D (usually referring to the minimum width of the slot opening 115 in the circumferential direction) of the slot opening 115 is greater than 0, but less than or equal to five times of the minimum radial width of the gap 119, i.e. 0≤D≤5G1. In one embodiment, the radial width D of the slot opening 115 is equal to or greater than the minimum radial width of the gap 119, but less than or equal to three times of the minimum radial width of the gap 119, i.e. G1≤D≤3G1. Alternatively, adjacent tooth tips 114 can be connected together by a narrow bridge 115a with a great magnetic resistance, as shown in Fig. 15.

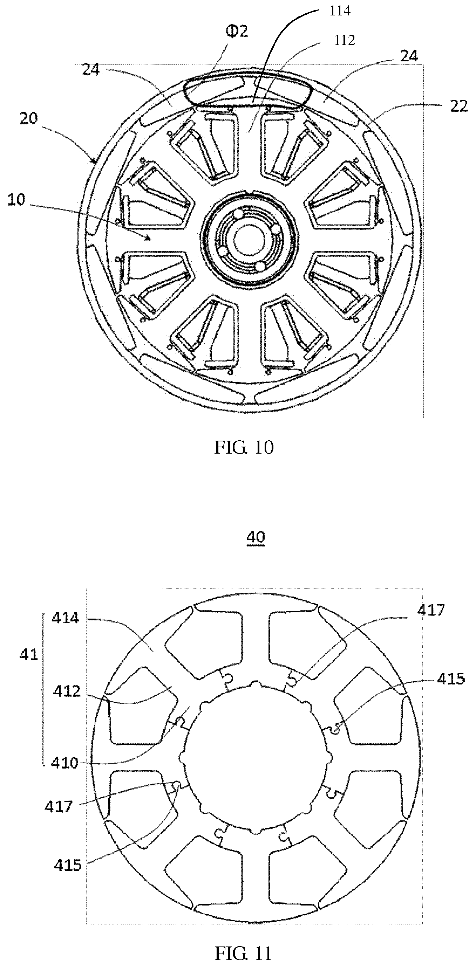

Referring also to Fig. 9 and Fig. 10, when the motor is not energized, the permanent magnet 24 of the rotor 20 produces an attractive force which attracts the teeth of the stator 10. Fig. 9 and Fig. 10 show the rotor 20 in different positions. Specifically, Fig. 9 shows the rotor 20 in a dead-point position (i.e. a center of the magnetic pole of the rotor is aligned with a center of the tooth tip of the stator). Fig. 10 shows the rotor 20 in an initial position (i.e. the stop position of the rotor when the motor is not energized or powered off). As shown in Fig. 9 and Fig. 10, the magnetic flux of the magnetic field produced by the magnetic pole of the rotor 20 that passes through the stator 10 is Φ₁ when the rotor 20 is at the dead-point position, the magnetic flux of the magnetic field produced by the magnetic pole of the rotor 20 that passes through the stator 10 is Φ₂ when the rotor 20 is at the initial position, and Φ₂> Φ₁ and the path of Φ₂ is shorter than that of Φ₁ and the resistance of Φ₂ is therefore less than that of Φ₁. Therefore, the rotor 20 can be positioned at the initial position when the motor is not energized, thus avoiding the dead-point position and hence avoiding the failure of starting the rotor when the motor is energized. In this embodiment, the rotor 20 stops at the initial position shown in Fig. 10 when the motor is not energized or powered off. At this initial position, a center line of the tooth tip 112 of the stator core is aligned with a center line of the area between two adjacent rotor magnetic poles 24. In this embodiment, the magnetic poles 24 are permanent magnetic poles and the center line of each tooth tip 112 of the stator core is aligned with the center line of the neutral area between two adjacent rotor magnetic poles 24 This position deviates the furthest from the dead-point position, which can effectively avoid the failure of starting the rotor when the motor is energized. Due to other factors such as friction in practice, the center line of the tooth body 112 of the stator core may deviate from the center line of the area between two adjacent rotor magnetic poles 24 by an angle such as an angle of 0 to 30 electric degrees, but the stop position is still far away from the dead-point position. That is, when the motor is not energized, the rotor stops at an initial position where the middle line of the tooth tip of the stator core is closer to the middle line of the area between two adjacent magnetic poles than middle lines of the two adjacent magnetic poles 24.

In the above embodiments of the present invention, the rotor can be positioned at the initial position deviating from the dead-point position by the leakage magnetic field produced by the rotor permanent magnetic pole 24 attracting with the tooth tips of the stator core 11. The leakage magnetic field produced by the rotor permanent magnetic pole 24 does not pass through the tooth bodies 112 and the windings. The cogging torque of the single-phase permanent magnet brushless motor configured as such can be effectively suppressed, such that the motor has enhanced efficiency and performance. Experiments show that a peak of the cogging torque of a single-phase outer-rotor brushless direct current motor configured as above (the rated torque is 1Nm, the rated rotation speed is 1000rpm, and the stack height of the stator core is 30mm) is less than 80mNm. The motor of the present invention can be designed with bidirectional startup capability according to needs. For example, the bidirectional rotation can be achieved by using two position sensors such as Hall sensors and an associated controller. It may also be designed to start up in a single direction, in which case only one position sensor is needed.

In addition, a distance between the end plate 221 of the single-phase outer rotor brushless motor and the end surface of the base 16 away from the end plate 221 is 65mm.

Fig. 11 illustrates a stator core 40 of a motor according to another embodiment of the present invention. The stator core 40 differs from the stator core 11 of the above embodiment in that: the stator core 40 of the present embodiment includes a plurality of individual tooth sections 41 that are connected with one another. Each tooth section 41 includes a yoke section 410, a tooth body 412 extending radially outwardly from the yoke section 410, and a tooth tip 414 extending from a distal end of the tooth body 414 in a circumferential direction. The tooth sections 41 are arranged along the circumferential direction to collectively form the stator core 40. The yoke sections 410 of the tooth sections 410 collectively form an annular yoke. The yoke sections 410 can be interlocked by convex-concave interlocking structure formed therebetween. In this embodiment, a protrusion 415 is formed at one circumferential side of each yoke section 410, and a recess 417 is formed at the other circumferential side of each yoke section 410. The protrusion 415 of each yoke section 410 is snap-fit in the recess 417 of another adjacent yoke section 410, and the recess 417 of each yoke section 410 receives the protrusion 415 of another adjacent yoke section 410, such that all the tooth sections 41 are connected into a whole body. Alternatively, the yoke sections 410 may have flat contacting surfaces that are fixed to each other by welding. Because the stator core 40 can be formed by interconnecting individual tooth sections 41, winding can be performed prior to connecting the tooth sections 41 into a whole body. Therefore, the slot opening between the tooth tips 414 can have a reduced size without affecting the winding process.

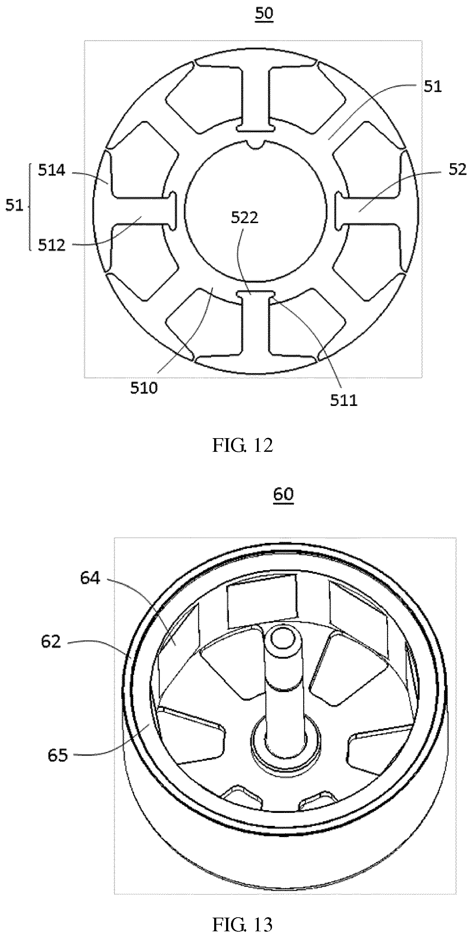

Fig. 12 illustrates a stator core 50 according to another embodiment of the present invention. The stator core 50 differs from the stator core 11 of the first embodiment in that: the stator core 50 of the present embodiment includes first teeth 51 integrally formed with the yoke 510 and separately formed second teeth 52. The second teeth 52 are snap-fit on the yoke 510, and the first teeth 51 and the second teeth 52 are alternatively arranged along the circumferential direction. In one embodiment, the second teeth 52 are inserted into the yoke portion 510. The yoke portion 510 has a plurality of inserting slots 511. A radial inner end of the second tooth 52 has an inserting portion 522 that matches with the inserting slot 511 in shape. In one embodiment, the inserting slot 511 is a swallowtail-shaped slot. The stator core 50 of this embodiment includes individual second teeth 52 which may be inserted into the yoke 510 after winding is completed. Therefore, the slot opening between the tooth tips can have a reduced size without affecting the winding process.

Fig. 13 and Fig. 14 illustrate a rotor 60 according to another embodiment of the present invention. The rotor 60 differs from the rotor 20 of the first embodiment in that: the rotor 60 further includes a packaging portion 65. Specifically, the rotor 60 is packaged by placing the rotor yoke 62 and permanent magnets 64 in a mold cavity and injecting plastic into the mold cavity.

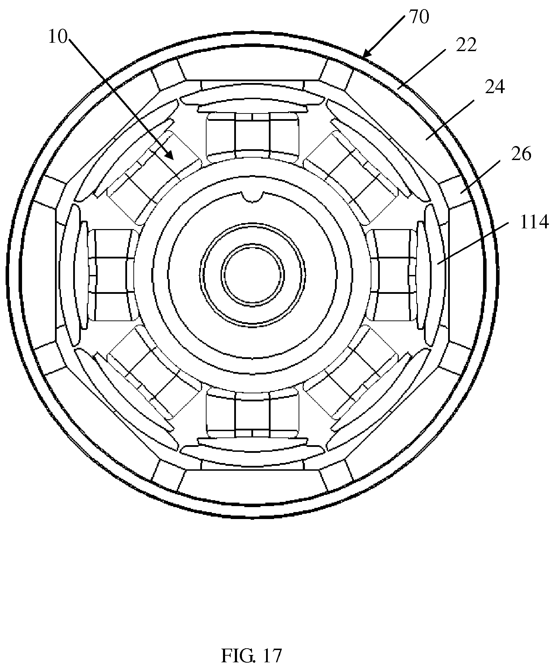

Fig. 17 illustrates a motor in accordance with another embodiment of the present invention. In this embodiment, the rotor 70 includes permanent magnets 26 and magnetic members 24 that are spacingly alternatively arranged in the circumferential direction. The permanent magnets 26 are magnetized in the circumferential direction of the rotor. Adjacent permanent magnets 26 have opposite polarities. The magnetic members 24 may be made from a hard magnetic material such as ferromagnet or rare earth magnet, or a soft magnetic material such as iron. The magnetic member 24 has a thickness progressively decreasing from a circumferential middle to two circumferential sides thereof. A minimum thickness of the magnetic member 24, i.e. the thickness at its circumferential sides, is substantially the same as that of the permanent magnet 26. Preferably, the inner circumferential surface of the magnetic member 24 facing the stator is a flat surface extending parallel to a tangential direction of an outer surface of the stator. As such, the inner circumferential surfaces of the permanent magnets and the inner circumferential surfaces of the magnetic members collectively form the inner surface of the rotor which is a symmetrical polygon in a radial cross-section of the rotor 70. The inner surfaces of the permanent magnets 26 and the inner surfaces of the magnetic members 24 collectively form a polygonal inner surface of the rotor 70. The stator 10 and the rotor 70 form therebetween a symmetrical uneven gap, which has a size progressively increasing from a circumferential middle to two circumferential sides of the magnetic member 24, and reaches the maximum width Gmax at the position corresponding to the permanent magnet 26. When the motor is de-energized, the rotor 50 is capable of being positioned at an initial position by leakage magnetic field generated by the permanent magnets 26 forming permanent magnetic poles, the leakage magnetic field comprising a plurality of flux circuits each passing through a corresponding permanent magnetic pole 26, two adjacent magnetic members 24 on opposite sides of the corresponding permanent magnetic pole 26 and a corresponding tooth tip 114 of the stator close the corresponding permanent magnetic pole 26.

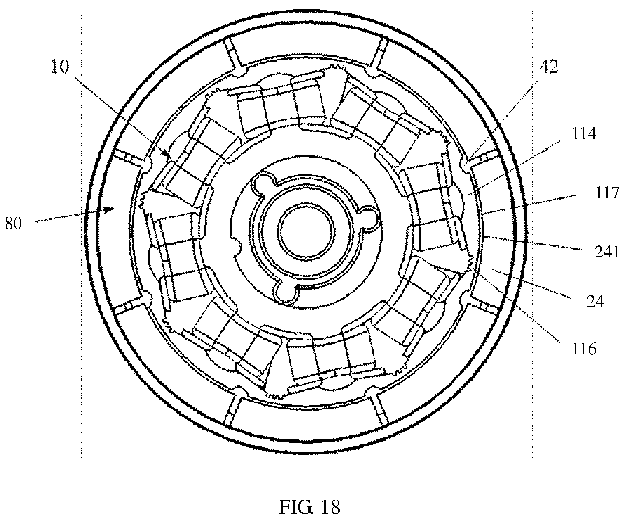

Fig. 18 illustrates a motor in accordance with another embodiment of the present invention. The tooth tips 114 of the stator 10 are connected to each other via magnetic bridges 116 in the circumferential direction, and the whole outer surface of the stator 10, i.e. the outer surface 117 of the tooth tip 114 is a closed cylindrical surface. The inner surface of the rotor 80, i.e. the inner circumferential surfaces 241 of the permanent magnets 24, are located on a cylindrical surface coaxial with the outer circumferential surface 117 of the stator 10. The outer circumferential surface 117 of the stator 10 and the inner circumferential surface 241 of the rotor 80 define a symmetric even gap. The outer circumferential surface 117 of the tooth tip 114 is provided with positioning grooves 42, which makes the tooth tip 114 have an asymmetrical structure, thereby ensuring that, when the rotor 80 is still, a center line of the area between two adjacent permanent magnets 54 deflects an angle relative a center line of the tooth tip 114 of the tooth of the stator 10. Preferably, when the rotor is still, the positioning slot 42 of the stator 10 is aligned with the center line of the two adjacent permanent magnets 24 of the rotor 80, which enables the rotor 80 to successfully start each time the motor is energized. Understandably, in this embodiment, the tooth tips 114 of the stator 10 may be separated from each other via a narrow slot opening in the circumferential direction.

The driving apparatus 100 for the washing machine adopts the single-phase outer rotor brushless motor 90, the stator core 11, 40, 70, 80 of the motor 90 has the small slot opening, and the gap 119 is optimally configured such as a symmetrical uneven gap. Therefore, the size and weight of the motor 90 is reduced.

Although the invention is described with reference to one or more preferred embodiments, it should be appreciated by those skilled in the art that various modifications are possible. For example, the rotor magnetic poles may also be of an integrated type rather than the split-type as described in the embodiments above, the number of the slots and poles may vary from 2-pole 2-slot to N-pole N-slot without departing from the scope of the present invention. Therefore, the scope of the invention is to be determined by reference to the claims that follow.

## Claims

**1.** A driving apparatus for a washing machine, comprising a single-phase outer rotor brushless motor and a transmission mechanism driven by the motor, the single-phase outer rotor brushless motor configured to drive a drum of the washing machine to rotate through the transmission mechanism, the single-phase outer rotor brushless motor comprising:
a stator including a stator core and windings wound around the stator core, the stator core including a yoke and a plurality of teeth extending outwardly from the yoke, each of the teeth including a tooth body and a tooth tip extending from a distal end of the tooth body in a circumferential direction; and
a rotor including a rotor yoke disposed around the stator core, and a permanent magnet disposed on an inner wall surface of the rotor yoke for forming a plurality of magnetic poles, inner surfaces of the magnetic poles facing outer surfaces of the tooth tips with a gap formed there between for allowing the rotor to rotate relative to the stator.

**2.** The driving apparatus for a washing machine of claim 1, wherein the gap is a symmetric gap such that the rotor is capable of being started bi-directionally.

**3.** The driving apparatus for a washing machine of claim 1 or 2, wherein a radial width of the gap corresponding with each magnetic pole is symmetrical with respect to a circumferential middle line of the magnetic pole.

**4.** The driving apparatus for a washing machine of any one of claims 1 to 3, wherein the gap is a symmetric uneven gap and the rotor is capable of being position at an initial position by leakage magnetic field generated by the permanent magnet of the rotor interacting with the tooth tips of the stator.

**5.** The driving apparatus for a washing machine of claim 4, wherein a radial width of the gap corresponding with each magnetic pole progressively increases from a center portion toward circumferential ends of the magnetic pole.

**6.** The driving apparatus for a washing machine of any one of claims 1 to 3, wherein the inner surfaces of the magnetic poles and the outer surfaces of the tooth tips are respectively located at two cylindrical surfaces coaxial with each other, the outer surface of each of the tooth tips forming a locating groove.

**7.** The driving apparatus for a washing machine of any one of claims 1 to 6, wherein the transmission mechanism includes a two-stage belt transmission.

**8.** The driving apparatus for a washing machine of claim 7, wherein the transmission mechanism includes a first transmission belt, a transmission wheel, and a second transmission belt, opposite ends of the first transmission belt are respectively connected to a rotary shaft of the single-phase outer rotor brushless motor and the transmission wheel such that the single-phase outer rotor brushless motor is capable of driving the transmission wheel to rotate, and opposite ends of the second transmission belt are respectively attached around the transmission wheel and the driving wheel such that the transmission wheel is capable of driving the driving wheel to rotate.

**9.** The driving apparatus for a washing machine of claim 8, wherein a transmission ratio of the rotary shaft of the single-phase outer rotor brushless motor to the transmission wheel is 2:1, and/or a transmission ratio of the transmission wheel to the driving wheel is 10:1.

**10.** The driving apparatus for a washing machine of any one of claims 1 to 9, wherein an outer diameter of the single-phase outer rotor brushless motor is 90mm, and an axial size of the single-phase outer rotor brushless motor between opposite two end surfaces thereof is 65mm.

**11.** The driving apparatus for a washing machine of any one of claims 1 to 9, wherein a slot opening is formed between each two adjacent tooth tips, and a width of the slot opening in the circumferential direction is less than or equal to five times of a minimum radial width of the gap.

**12.** The driving apparatus for a washing machine of any one of claims 1 to 9, wherein a slot opening is formed between each two adjacent tooth tips, a width of the slot opening in the circumferential direction is less than or equal to three times of a minimum radial width of the gap.

**13.** The driving apparatus for a washing machine of any one of claims 1 to 5, wherein a ratio of a maximum radial width to a minimum radial width of the gap is greater than 1.5.

**14.** The driving apparatus for a washing machine of claim 1, wherein the outer surfaces of the tooth tips are located on the same cylindrical surface, and a center axis of the cylindrical surface is coincident with a center axis of the rotor.

**14.** The driving apparatus for a washing machine of any one of claims 1 to 9, wherein the inner surface of the permanent magnetic pole is a flat surface or arc surface, with a pole-arc coefficient greater than 0.75.

**15.** A washing machine, comprising a drum, a single-phase outer rotor brushless motor and a transmission mechanism driven by the motor, the single-phase outer rotor brushless motor configured to drive the drum of the washing machine to rotate through the transmission mechanism, the single-phase outer rotor brushless motor comprising:
a stator including a stator core and windings wound around the stator core, the stator core including a yoke and a plurality of teeth extending radially outwardly from the yoke, each of the teeth including a tooth body and a tooth tip extending from a distal end of the tooth body in a circumferential direction; and
a rotor including a rotor yoke disposed around the stator core, and a permanent magnet disposed on an inner wall surface of the rotor yoke for forming a plurality of magnetic poles, inner surfaces of the magnetic poles facing outer surfaces of the tooth tips with a gap formed there between for allowing the rotor to rotate relative to the stator, the transmission mechanism including a two-stage belt transmission.

**16.** The washing machine of claim 15, wherein the gap is a symmetric gap such that the rotor is capable of being started bi-directionally.

**17.** The washing machine of claim 16, wherein the gap is a symmetric uneven gap and the rotor is capable of being position at an initial position where a middle line of the tooth tip of the stator core is closer to a middle line of an area between two adjacent magnetic poles than middle lines of the two adjacent magnetic poles.
